# EUROPEAN PATENT SPECIFICATION

(11) **EP 1 312 509 B1**
(45) Date of publication and mention of the grant of the patent: **06.10.2004**
(21) Application number: 02257711.8
(22) Date of filing: 06.11.2002
(51) Int. Cl.: B60R 1/076

(54) **Rear view mirror assembly**
Rückblickspiegelanordnung
Ensemble de rétroviseur

(30) Priority: 08.11.2001 US 10331
(43) Date of publication of application: 21.05.2003
(73) Proprietor: Metagal Industria e Comercio Ltda, Estado de Minas Gerais CEP 37540-000 (BR)
(72) Inventor: de Melo Neto, Leonidas Venancio, Estado de Sao Paulo, CEP 07111-040 (BR)
(74) Representative: Johnstone, Douglas Ian

(56) References cited:
- EP-A- 0 402 465
- EP-A- 1 236 616
- US-A- 4 789 232

## Description

The present invention relates generally to rear-view mirrors for vehicles, and more particularly, relates to a rear-view mirror assembly having a stabilisation device for stabilising the position of the mirror plate.

In the applicant's related patent US 6,361,175 (corresponding to European Patent 1,236,616 published on 4 September 2002) a stabilisation device for an external rear-view mirror for automotive vehicles is disclosed and claimed, which essentially comprises a mirror set and a base connected to the mirror set in an articulated manner. The mirror set generally is made up of a mirror plate having a selected position, a regulation device including an actuator for controlling the mirror plate position, a support structure into which the regulating device actuator is fixed and a housing that accommodates the components of the mirror set and to which the support structure is fixed. The mirror set also includes a stabilisation device for stabilising the position of the mirror incorporated in the support structure and mounted in an articulated manner around a vertical pivot post of the base. The stabilisation device essentially comprises the pivot post and a plate structure that is fixed laterally to the vehicle and which has an extension or flange portion, into which an end of the post is incorporated. The stabilisation device for the mirror determines the stabilisation of the mirror set by means of an axial squeezing force, "F", applied to the pivot post. The stabilisation device includes a sleeve, incorporated in the support structure and articulated for movement around the pivot post, a first indented surface of the mirror set provided at one end of the sleeve, and a second indented surface situated on the base adjacent to and confronting the first indented surface of the sleeve. The first and second indented surfaces have corresponding profiles such that they are engageable with each other. The device also includes an axial compression spring disposed around the pivot post which compresses the sleeve to urge the indented surface of the mirror set disposed on the sleeve into contact with the indented surface of the base. The device also includes a reaction washer fixed about the pivot post and against which the spring is compressed.

EP0402465 A1 discloses another foldable rear view mirror assembly for vehicles, with the features corresponding to the preamble of claim 1.

The present invention, as set out in claim 1, offers an improvement to the above-described mirror stabilisation device, specifically regarding the pivot post and the second indented surface of the device, and provides a more efficient functioning of the device.

The invention will now be described by way of example only with reference to the accompanying figures in which:

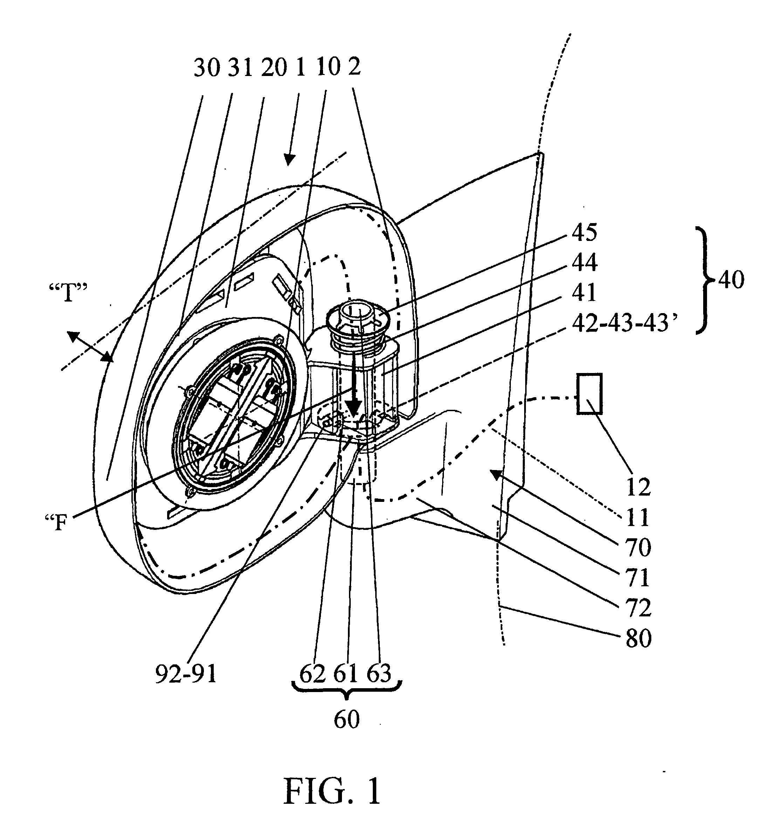

FIG. 1 shows a perspective view of a mirror with the stabilisation device of the present invention;

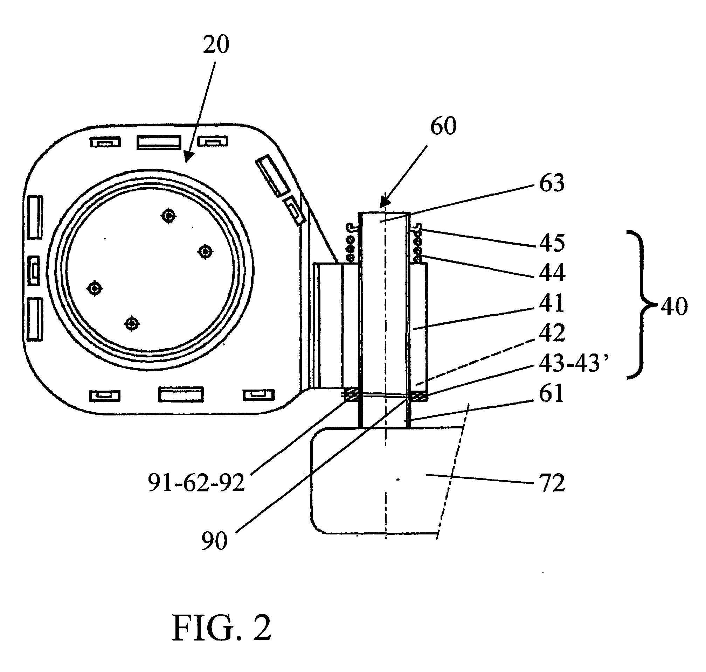

FIG. 2 shows a front view of the support structure of the mirror containing the stabilisation device; and

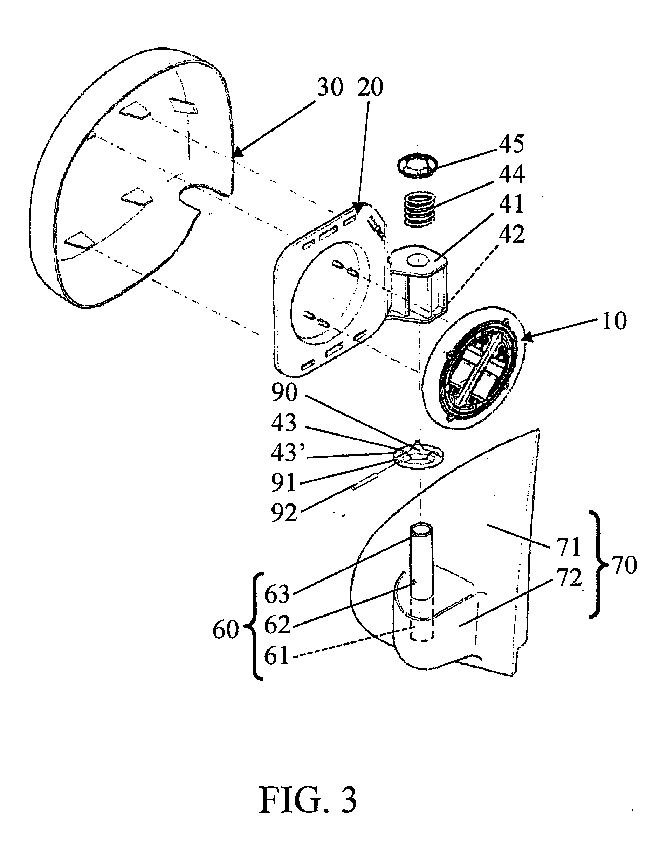

FIG. 3 shows an exploded perspective view of the mirror and stabilisation device of Fig. 1.

As shown in the accompanying figures, the stabilisation device for a rear-view mirror of a vehicle, according to the present invention, generally comprises a mirror set 1 and a base 70 for receiving or supporting the mirror set 1 in an articulated manner. The base 70 is fixed to a lateral side 80 of a vehicle.

The mirror set essentially comprises a mirror plate 2 and a mechanical or electrical device for regulating the position of the mirror plate. The regulating device includes an actuator 10, to which a back side of the mirror plate is fixed. Transmission cables or an electrical cable 11 lead from the actuator to actuation lever(s) or button(s) 12 positioned inside the vehicle. The mirror set 1 further includes a support structure 20, in or to which the actuator 10 of the mirror plate 2 remains fixed and a housing 30 with an opening 31 directed toward a rear region of the vehicle and which accommodates the mirror plate 2, the mirror plate actuator 10 and the support structure 20. The support structure 20 is also fixed in the housing 30. The stabilisation device 40 for stabilising the mirror's position is incorporated in or forms part of the support structure, which is mounted in an articulated manner around a vertical pivot post 60 of the base 70. The base 70 is generally made up of the pivot post 60 and a plate structure 71 which is fixed in or to the lateral side 80 of the vehicle and which has an extension or flange portion 72, into which an end of the post 60 is incorporated.

The stabilisation device 40 determines and sets the stabilisation of the mirror set by means of an axial squeezing force relative to the pivot post 60. The device 40 generally comprises a sleeve 41 incorporated in or at the end of the support structure 20. The sleeve is tight or snug fit round the pivot post 60 and is free to turn thereabout. The device 40 also includes a first indented surface 42 of the mirror set 1 disposed in or at one of the ends of the sleeve 41 disposed around the pivot post 60, and a second indented surface 43 disposed around the pivot post 60 and contacting the first indented surface 42 of the sleeve 41. The first indented surface 42 and the second indented surface 43 have correspondingly configured profiles which engage each other. An axial compression spring 44 is disposed around the pivot post 60. One end of the spring 44 presses against the end of the sleeve 41 opposite to that including the indented surface 42. A reaction washer or restraining means 45 is fixed around the pivot post 60 which presses against an opposite end of the spring 44.

The spring 44 is selected to compress the first indented surface 42 of the mirror set 1 against the second indented surface 43 of the base with an adequate axial force "F" in order to effect locking between the indented surfaces 42 and 43 and hence provide stabilisation of the mirror set 1 relative to the base 70 under normal use conditions. Further, when the mirror set 1 receives an impact producing a torque T at the stabilisation device, where O<T<T _{balance}, the torque force is resisted without jeopardising the integrity of the mirror set. Rotation of the sleeve 41 around the post may be prevented entirely or limited rotation may occur followed by a return rotation in the opposite direction when the force "F" has been removed. When T _{balance}<T< ₘₐₓᵢₘᵤₘ the sleeve 41 and support structure 20 may remain rotated away from a normal use position after the force "F" has been removed and it will be necessary to restore the mirror set to the normal use position for example by hand.

The indented surfaces 42 and 43 comprise projections and small channels having trapezoidal cross-sections, radially disposed in an end of the sleeve 41 and around the pivot post 60 respectively. In either configuration, oblique lateral faces of the surfaces 42 and 43 remain abutted against each other and have inclinations which are selected to prevent sliding between the surfaces when O<T<T balance and possibly also when T _{balance}<T<T maximum.

The stabilising device 40 for stabilising the mirror position in the mirror according to the invention provides an improved configuration of the pivot post 60 and the second indented surface 43. The pivot post 60 has a lower end 61 incorporated in the flange portion 72 of the base 70 and a radial opening or hole 62 in an intermediate region of the post 60. The post 60 further has a second or upper free end 63. The second indented surface 43 is formed in an upper surface of a ring 43' having a central opening 90. The pivot post 60 extends through and is a tight fit in the opening 90. The ring 43' also includes a radial hole 91 that is aligned with the radial hole 62 in the pivot post 60. A pin 92 fixes the ring 43' to the pivot post 60 by being inserted through the aligned radial holes 91 and 62 of the ring 43' and the pivot post 60 respectively.

The foregoing fully explains the general principles of the present invention so that others can, by applying current knowledge, readily adapt it for various applications without omitting features that, from the standpoint of prior art, fairly constitute essential characteristics of the generic or specific aspects of this invention.

## Claims

1. A rear view mirror assembly for a motor vehicle comprising:
a base (70) including an extension portion (72) and a vertical pivot post (60) with one end fixed to the extension portion (72), the base (70) being securable to a lateral side (80) of a vehicle;
a mirror set (1) connected to the base (70) so as to articulate around the pivot post (60) including a mirror plate (2) and a support structure (20) to which the mirror plate is attached;
a housing (30) fixed to the support structure (20) and surrounding the mirror set (1) ;
a stabilising device (40) for stabilising the position of the mirror plate (2) by means of an axial force applied to the pivot post (60), the stabilising device (40) being incorporated into the support structure (20) and including a sleeve (41) in which the pivot post (60) is located, the sleeve (41) being arranged to articulate around the pivot post (60) and having a first indented surface (42); **characterized by** the vertical pivot post (60) having a radial opening (62) in an intermediate region;
a ring member (43') having a central opening (90) receiving the pivot post (60), a radial opening (91) aligned with the radial opening (62) of the pivot post (60) and a second indented surface (43) incorporated into a face of the ring member (43') which corresponds to and engages with the first indented surface (42); and
a pin (92) for securing the ring member (43') about the pivot post (60) wherein said pin (92) is received through the aligned radial openings (62, 91).

2. The assembly according to claim 1 further comprising an axial compression spring (44) disposed around the pivot post (60) to compress said sleeve and to urge the first and second indented surfaces (42, 43) into contact with each other.

3. The assembly according to claim 2 further comprising a reaction washer (45) fixed around the pivot post (60), against which the compression spring (44) presses.

## Patentansprüche

1. Rückspiegelanordnung für ein Kraftfahrzeug enthaltend:
eine Basis (70) umfassend einen Verlängerungsabschnitt (72) und eine vertikale Schwenkstange (60), die mit einem Ende an dem Verlängerungsabschnitt (72) befestigt ist, wobei die Basis (70) an eine Längsseite (80) eines Fahrzeugs anbringbar ist;
einen Spiegelsatz (1), der mit der Basis (70) verbunden ist, um um die schwenkstange (60) herum zu schwenken, umfassend eine Spiegelplatte (2) und eine Trägerstruktur (20), an die die Spiegelplatte angebracht ist;
ein Gehäuse (30), das an der Trägerstruktur (20) befestigt ist und den Spiegelsatz (1) umgibt;
eine Stabilisiereinrichtung (40) zum Stabilisieren der Position der Spiegelplatte (2) mittels einer axialen Kraft, die auf die Schwenkstange (60) ausgeübt wird, wobei die Stabilisiereinrichtung (40) in die Trägerstruktur (20) integriert ist und eine Hülse (41) umfasst, in der sich die Schwenkstange (60) befindet, wobei die Hülse (41) zum Schwenken um die Schwenkstange (60) herum angeordnet ist und eine erste gezackte Oberfläche (42) hat;
**gekennzeichnet durch** die vertikale Schwenkstange (60), die eine radiale Öffnung (62) in einem Zwischenbereich hat;
ein Ringelement (43'), das eine zentrale Öffnung (90) hat, die die Schwenkstange (60) aufnimmt, sowie eine radiale Öffnung (91), die mit der radialen Öffnung (62) der Schwenkstange (60) fluchtet, und eine zweite gezackte Oberfläche (43), die in die Vorderseite des Ringelements (43') integriert ist und der ersten gezackten Oberfläche (42) entspricht und in diese eingreift;
einen Stift (92) zum Anbringen des Ringelements (43') an der Schwenkstange (60), wobei der Stift (92) **durch** die fluchtenden radialen Öffnungen (62, 91) aufgenommen wird.

2. Anordnung nach Anspruch 1, ferner enthaltend eine axiale Druckfeder (44), die um die Schwenkachse (60) herum angeordnet ist, um die Hülse unter Druck zu bringen und die ersten und zweiten gezackten Oberflächen (42, 43) miteinander in Kontakt zu zwingen.

3. Anordnung nach Anspruch 2, ferner enthaltend eine gegenwirkende Unterlegscheibe (45), die um die Schwenkstange (60) herum befestigt ist und gegen die die Druckfeder (44) drückt.

## Revendications

1. Assemblage de rétroviseur pour véhicule motorisé comprenant :
une base (70) comprenant une partie de prolongement (72) et un montant de pivotement vertical (60) avec une extrémité fixée à la partie de prolongement (72), la base (70) pouvant être fixée à un côté latéral (80) d'un véhicule ;
un ensemble de miroir (1) relié à la base (70) afin de s'articuler autour du montant de pivotement (60) comprenant une plaque-miroir (2) et une structure de support (20) à laquelle la plaque-miroir est attachée ;
un logement (30) fixé à la structure de support (20) et entourant l'ensemble de miroir (1) ;
un dispositif de stabilisation (40) pour stabiliser la position de la plaque-miroir (2) au moyen d'une force axiale appliquée sur le montant de pivotement (60), le dispositif de stabilisation (40) étant incorporé dans la structure de support (20) et comprenant un manchon (41) dans lequel le montant de pivotement (60) est situé, le manchon (41) étant agencé pour s'articuler autour du montant de pivotement (60) et ayant une première surface ayant des indentations (42) ; **caractérisé par le fait que** le montant de pivotement vertical (60) présente une ouverture radiale (62) dans une région intermédiaire ;
un élément de bague (43') ayant une ouverture centrale (90) recevant le montant de pivotement (60), une ouverture radiale (91) alignée avec l'ouverture radiale (62) du montant de pivotement (60) et une seconde surface ayant des indentations (43) incorporée dans une face de l'élément de bague (43') qui correspond à et vient en prise avec la première surface ayant des indentations (42) ; et
une goupille (92) pour fixer l'élément de bague (43') autour du montant de pivotement (60) dans lequel ladite goupille (92) est reçue à travers les ouvertures radiales alignées (62, 91).

2. Assemblage selon la revendication 1, comprenant en outre un ressort de compression axial (44) disposé autour du montant de pivotement (60) pour comprimer ledit manchon et pour forcer les première et seconde surfaces ayant des indentations (42, 43) à entrer en contact l'une avec l'autre.

3. Assemblage selon la revendication 2, comprenant en outre une rondelle de réaction (45) fixée autour du montant de pivotement (60), contre laquelle le ressort de compression (44) prend appui.
